# EUROPEAN PATENT SPECIFICATION

(11) **EP 0 241 013 B1**
(45) Date of publication and mention of the grant of the patent: **20.07.1994**
(21) Application number: 87105207.2
(22) Date of filing: 08.04.1987
(51) Int. Cl.: G01N 27/90

(54) **Apparatus for detecting surface microdefects in a metal workpiece**
Vorrichtung zur Feststellung von Oberflächenmikrofehlern in einem Metallwerkstück
Appareil pour la détection de défauts microscopiques de surface dans une pièce métallique

(30) Priority: 11.04.1986 IT 6729686
(43) Date of publication of application: 14.10.1987
(73) Proprietor: FIAT AUTO S.p.A., 10135 Torino (IT)
(72) Inventor: La Torre, Carlo, I-10100 Torino (IT)
(74) Representative: Boggio, Luigi

(56) References cited:
- FR-A- 2 261 526
- US-A- 2 351 944
- US-A- 3 611 120
- US-A- 3 753 096
- US-A- 3 840 802
- US-A- 4 134 067

## Description

This invention relates to an apparatus for detecting surface microdefects in a metal workpiece. Such an apparatus is known from FR-A-2 261 526 and US-A-3 611 120.

Particularly, but not exclusively, the invention relates to an apparatus suitable for checking vehicle components such as the camshaft, crankshaft, live axles, injection pump pistons etc., in order to identify microdefects such as surface microfissures. Components of the aforesaid type are generally subjected to grinding, during which tensile stresses can be created due to local overheating of the material. In this respect, sudden cooling of the material can give rise to microfissures which are known to act as a triggering point for cracks which can lead to subsequent fracture of the material in which they have been formed.

The checking systems used up to the present time during production utilise either magnetoscopic techniques or penetrating liquids, these being systems in which the final check is solely visual and therefore depends on the subjective judgement of the operator. In order to obtain an objective evaluation, systems using optoelectronic sensors have also been proposed. However, these systems can be used only at the experimental level in that the operating conditions prevailing in the workshop (imperfect cleaning of the workpieces under examination, difficulty of inspecting workpieces of complicated geometry etc.) render them unpractical. Furthermore, the relative apparatus is extremely costly.

It is also known to use differential induced current sensors formed conveniently from two bars of ferrite (or suitable ferromagnetic material) disposed parallel to each other side-by-side at a distance apart of a few millimetres. Copper windings are provided on the lower part of the two bars. An open magnetic circuit is therefore created which is able to detect the presence of cracks by measuring the difference in the impedance of the two said winding. However, differential induced current sensors of the aforesaid type are insufficiently sensitive. This is because such sensors offer poor spatial resolution by virtue of the fact that the magnetic field established between the two ferrite elements is not concentrated (or focused) in the measuring region. Moreover, the resolution power of the sensor depends on the distance between the ferrite bars which, because of the thickness of the conductors used for the windings, cannot be disposed closer together than a certain limit.

The object of the present invention is to provide an apparatus for detecting surface microdefects in a metal workpiece which obviates the aforesaid drawbacks of apparatuses of known type.

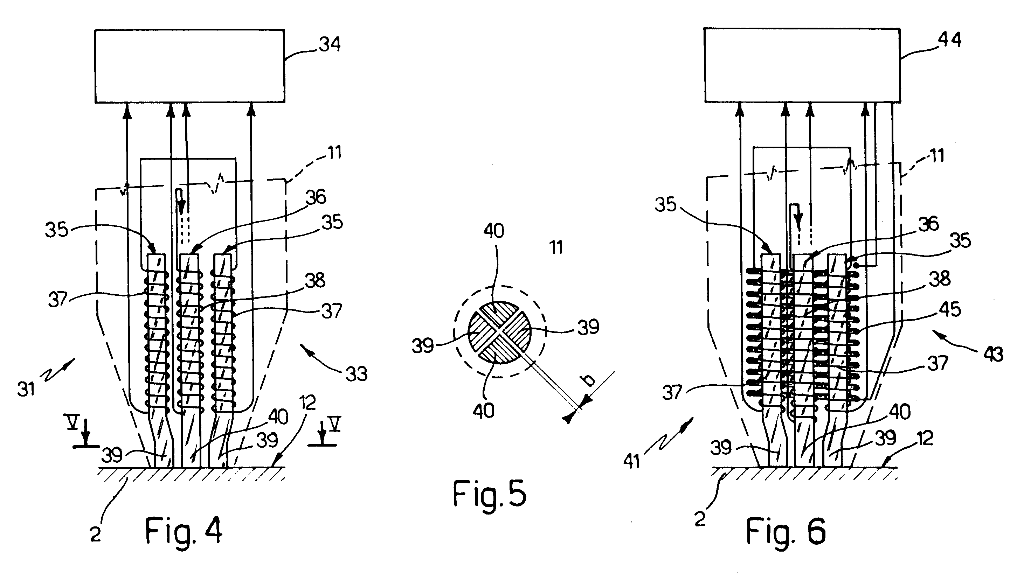

Said object is attained according to the present invention by an apparatus according to Claim 1 The present invention will be more apparent from the description of some preferred embodiments thereof given hereinafter by way of non-limiting example with reference to the accompanying drawings, in which:
Figure 4 is an elevational view of a third embodiment of the apparatus according to the invention;
Figure 5 is a section on the line V-V of Figure 4 to an enlarged scale;
Figure 6 is a diagrammatic elevational view of a fourth embodiment of the apparatus according to the present invention;
Figure 4 shows an apparatus 31 also provided with a sensor 33 and a processing unit 34. In particular, the sensor 33 comprises two pairs 35, 36 of ferromagnetic cores on which respective windings 37, 38 are wound. Specifically, the pairs 35 and 36 are disposed such that the respective cores are diametrically opposite. The relative windings 37, 38 are connected in series. Four terminals constituting the end terminals of the pairs of windings 37, 38 therefore lead to the processing unit 34. Again in this case, the pairs of cores 35, 36 have their respective end portions 39, 40 conveniently converging so as to present opposing facing surfaces separated by an air gap b (see Figure 5), the width of which is of the order of a few tens of »m. As can be seen in Figure 5, the end portions 39, 40 of the cores 35, 36 are delimited externally by a cylindrical surface, and each of them is shaped in cross-section as a circular sector with a 90° angle at its centre.

The processing unit 34 performs the function of measuring the difference in the impedances of the windings 37, 38.

The apparatus 41 illustrated in Figure 6 also comprises a sensor 43 and a processing unit 44. The sensor 43 is essentially equal to the sensor 33 of the apparatus 31, and consequently common parts are indicated by the same reference numerals. The sensor 43 is provided with a further winding 45, the terminals of which are connected to respective outputs of the processing unit 44 in order to induce respective voltages in the windings 37, 38 carried by the respective cores 35, 36. The opposing terminals of the windings 37, 38 lead to respective inputs of the processing unit 44, which measures the respective induced voltages and calculates their amplitude and phase difference.

The operation of the apparatuses described heretofore is as follows. Firstly, the various processing units feed the respective windings with a signal having an optimum frequency of the order of one or a few Mhz. Each sensor is then made to traverse the surface 12 of the workpiece 2 so as to scan the entire relevant surface of said workpiece 2.

The apparatus 31 and 41 operate in the same manner.

Specifically, they calculate the difference in the impedances of the respective windings as heretofore described. More specifically, as the two windings 37 of the apparatus 31 are connected in series, as are the two windings 38, it is apparent that the impedance difference calculated by the processing unit 34 represents the difference between the sum of the impedances of the windings 37 and the sum of the impedances of the windings 38.

From the aforegoing, the apparatus 41 can also be considered analogous from the operational viewpoint. In this respect, the processing unit 44 generates an excitation voltage through the respective winding 45, and calculate the amplitude and phase difference of the induced voltages measured across the terminals 37, 38. In this latter case, analogously to that described with reference to Figure 4, this voltage induced by the pairs of windings 37, 38 obviously consists of the sum of the voltages across the ends of each winding, as the windings indicated by the same reference numeral are connected in series.

If microdefects such as surface microfissures are absent, the difference in the impedance or induced voltage is zero, whereas it assumes a significant value if a microfissure lies in correspondence with the air gap. The air gap has a very small width (of the order of tens of »m), and it has been observed that this allows high resolution and sensitivity to be obtained, thus enabling microfissures to be identified which would not be identified by conventional methods.

It has been noted that the microfissure is more easily identified if it runs in the same direction as the air gap. In any event it is obvious that the aforesaid drawback is not encountered in the embodiments shown in Figures 4, and 6, in which the sensitivity zones of the respective sensor device are not limited to a single direction.

The advantages of the apparatuses according to the present invention are apparent from an examination of their characteristics. In this respect, these apparatuses are able to identify microdefects such as microfissures which would be practically unidentifiable by the aforesaid systems of known type, and in addition they have the advantage of being able to be used in workshops in that their operation does not require scrupulous cleaning of the workpieces under examination, neither is their application limited substantially by the geometry of the workpiece to be examined.

Finally, it is apparent that modifications can be made to the apparatuses heretofore described but without leaving the present invention. For example, in order to prevent the air gap in correspondence with the end portions of the said cores becoming excessively occupied by undesirable material which could falsify the measurements, a non-ferromagnetic separating element of conducting or non-conducting type could be used to entirely occupy the space lying between said adjacent ends. This element could for example be a common copper foil.

In a more complete embodiment, each sensor of the aforesaid apparatuses could be supported by a pneumatically-sustained movement system. This would eliminate direct contact between the sensor and the workpiece to be inspected, with consequent longer life of the sensor, which would not deteriorate by friction.

Correspondingly, the speed of inspection of the workpiece would also be increased, allowing checking to be carried out within a time in line with the production rate.

Conveniently, the casing of each sensor could be enclosed within a conducting housing, to thus obtain the advantage of limiting dispersed flux only to the region involved in the measurement, while at the same time substantially reducing any edge effect.

It will also be noted that it is not necessary for the end portions of the cores of the sensors shown in Figures 4 and 6 to be delimited externally by cylindrical surface portions, in that they could be of any convenient polygonal cross-section (rectangular, square etc.).

According to a further embodiment, an apparatus could be conceived provided with a plurality of side-by-side sensors, for example disposed at the nodes of a lattice, so as to be able to be placed directly in contact with the surface of the metal workpiece under examination. In this case, the apparatus would have to be provided with suitable processing means able to electronically scan the signals fed by the sensors.

## Claims

1. An apparatus for detecting surface microdefects in a metal workpiece (2) comprising at least one induced current sensor (33, 43) formed of independent parallel bar cores (35, 36) of ferromagnetic material, one end portion of each one of said cores (35, 36) supporting at least a corresponding winding (37, 38), said cores (35, 36) carrying at their other end corresponding terminal portions (39, 40) not covered by said windings (37, 38) and defining an air gap (b) of the order of a few tens of »m, said cores (35, 36), said windings (37, 38)) and said terminal portions (39, 40) being housed into a non-ferromagnetic casing (11) having an end surface for scanning the workpiece surface (12), and comprising a processing unit (34, 44) adapted to control at a high frequency said windings (37, 38) as to supply the currents induced therein, said processing unit (34, 44) being provided with means for measuring the difference of induced currents,
characterised in that
- said sensor (33, 43) is formed with at least two pairs of cores (35, 36) parallel to a common axis, said pairs of cores (35, 36) being arranged in a sequence circumferentially around said axis, whereby at least two sensitive directions of the sensor are provided;
- the windings (37, 38) of alternate cores (35, 36) are serially connected as to supply to said processing unit (24, 34) the sum of currents induced in the serially connected windings (37, 38);
- each one of said terminal portions (39, 40) is integral with the corresponding one of said cores (35, 36) and is connected therewith by means of a tapered converging zone, each said terminal portion (39, 40) being delimited by an outer surface lying in a common cylinder and coaxial with said axis, and by two radial surfaces facing the radial surfaces of the adjacent terminal portion (40, 39) to define said gaps (b), the front surfaces of said terminal portions (39, 40) being flush with said end surface of said casing (11) and exposed to outside therefrom.

2. An apparatus as claimed in claim 1, characterised in that said sensor (33, 43) is formed with two pairs of cores (35, 36), each one of said terminal portions (39, 40) having a circular sector cross-section to define a pair of said gaps (b)angularly distanced 90°, the windings (37, 38) of the diametrically opposite cores (35, 36) being serially connected.

3. An apparatus as claimed in claim 1 or 2, characterised in that said processing unit (34) is provided with means for measuring the impedance of said windings (37, 38).

4. An apparatus as claimed in claim 1 or 2, characterised in that said sensor (43) comprises an auxiliary winding (45) embracing said cores (35, 36) and connected to respective outputs of said processing unit (44), said processing unit (44) having means for powering said auxiliary winding (45) to induce respective currents in said windings (37, 38), and means for measuring the amplitude and phase of currents induced in said windings (37, 38).

5. An apparatus as claimed in any one of the preceding claim, characterised in that said gaps (b) is filled with a non-ferromagnetic metallic material.

6. An apparatus as claimed in claim 5, characterised in that said non-ferromagnetic metallic material is essentially in form of a copper foil.

7. An apparatus as claimed in any one of the preceding claim, characterised in that said casing (11) is enclosed within an electrically conductive housing for limiting dispersed current flux and for reducing the edge effect.

8. An apparatus as claimed in any one of the preceding claim, characterised in that it is supported by pneumatically-sustained means to eliminate direct contact of said sensor (33, 43) and said workpiece (2) and to reduce friction in the relative scanning movement.

9. An apparatus as claimed in any one of the preceding claim, characterised in that it comprises a plurality of said sensors (33, 43) arranged at the nodes of a lattice, said processing unit (34, 44) being adapted to electronically scan the signals fed by said plurality of sensors (33, 43).

## Patentansprüche

1. Vorrichtung zur Feststellung von Oberflächenmikrofehlern in einem Metallwerkstück (2) mit mindestens einem aus unabhängigen parallelen Stabkernen (35, 36) aus ferromagnetischem Werkstoff gebildeten induzierten Stromfühler (33, 43), wobei ein Endabschnitt von jedem der Kerne (35, 36) mindestens eine zugeordnete Wicklung (37, 38) trägt, dieKerne (35, 36) an ihrem anderen Ende zugeordnete Anschlußabschnitte(39, 40) tragen, die nicht mit den Wicklungen (37, 38) bedeckt sind undeinen Luftspalt (b) in der Größenordnung von einigen zehn »m bilden, dieKerne (35, 36), die Wicklungen (37, 38) und die Anschlußabschnitte (39,40) in einem nicht-ferromagnetischem Gehäuse (11) untergebracht sind,welches einen Endabschnitt zum Abtasten der Werkstuckoberfläche (12) aufweist, und mit einer Prozessoreinheit (34, 44), die vorgesehen ist, die Wicklungen (37, 38) mit einer hohen Frequenz zu überwachen, um die darin induzierten Ströme zu liefern, wobei die Prozessoreinheit (34, 44) mit Mitteln zur Messung der induzierten Stromunterschiede versehen ist, dadurch gekennzeichnet, daß
- der Fühler (33, 43) mit wenigstens zwei Paaren von Kernen (35, 36) parallel zu einer gemeinsamen Achse gebildet ist, wobei die Paare von Kernen (35, 36) in einer Folge kreisförmig um die Achse angeordnet sind, wodurch wenigstens zwei empfindliche Richtungen des Fühlers vorgesehen sind;
- die Wicklungen (37, 38) von abwechselnden Kernen (35, 36) in Reihe verbunden sind, um an der Prozessoreinheit (24, 34) die Summe der in die in Reihe verbundenen Wicklungen (37, 38) induzierten Ströme zu liefern;
- ein jeder der Anschlußbereiche (39, 40) integriert mit einem der zugehörigen Kerne (35, 36) ist und mit diesem mittels eines sich kegelförmig verjüngenden Bereiches verbunden ist, wobei jeder Anschlußabschnitt (39, 40) durch eine äußere Oberfläche, die in einem gemeinsamen Zylinder und koaxial zur Achse liegt, und durch zwei radiale Flächen, welche den radialen Flächen des benachbarten Anschlußabschnittes (40, 39) gegenüberliegen, um die Spalten (b) zu definieren, begrenzt ist, und die Vorderflächen der Anschlußabschnitte (39, 40) in gleicher Höhe mit der Endfläche des Gehäuses (11) und davon nach außen frei sind.

2. Vorrichtung nach Anspruch 1, dadurch gekennzeichnet, daß der Fühler (33, 43) mit zwei Paar von Kernen (35, 36) versehen ist, wobei jeder der Anschlußbereiche (39, 40) einen Kreissektor-Querschnitt aufweist, um ein Paar von Spalten (b) winkelig mit 90° beabstandet zu bilden, und die Wicklungen (37, 38) der sich dimetral gegenüberliegenden Kerne (35, 36) in Reihe verbunden sind.

3. Vorrichtung nach einem der Ansprüche 1 oder 2, dadurch gekennzeichnet, daß die Prozessoreinheit (34) mit Mitteln zum Messen der Impedanz der Wicklungen (37, 38) versehen ist.

4. Vorrichtung nach den Ansprüchen 1 oder 2, dadurch gekennzeichnet, daß der Fühler (43) eine Hilfswicklung (45) aufweist, welche die Kerne (35, 36) umfaßt und mit entsprechenden Ausgängen der Prozessorseinheit (44) verbunden ist, wobei die Prozessoreinheit (44) Mittel zum Betreiben der Hilfswicklung (45), um unterschiedliche Ströme in die Wicklungen (37, 38) zu induzieren, und Mittel zum Messen der Amplitude und Phase von in die Wicklungen (37, 38) induzierten Ströme aufweist.

5. Vorrichtung nach irgendeinem der vorhergehenden Ansprüche, dadurch gekennzeichnet, daß die Spalten (b) mit einem nicht-ferromagnetischen metallischen Werkstoff gefüllt sind.

6. Vorrichtung nach Anspruch 5, dadurch gekennzeichnet, daß der nicht-ferromagnetische metallische Werkstoff im wesentlichen in Form einer Kupferfolie vorliegt.

7. Vorrichtung nach irgendeinem der vorangehenden Ansprüche, dadurch gekennzeichnet, daß das Gehäuse (11) innerhalb einer elektrisch leitenden Umhüllung eingeschlossen ist, um den zerstreuten Stromfluß zu begrenzen und die Kantenwirkung zu reduzieren.

8. Vorrichtung nach irgendeinem der vorangehenden Ansprüche, dadurch gekennzeichnet, daß sie durch pneumatisch unterstützte Mittel getragen wird, um den direkten Kontakt des Fühlers (33, 43) und des Werkstücks (2) zu vermeiden und die Reibung in der entsprechenden Abtastbewegung zu reduzieren.

9. Vorrichtung nach irgendeinem der vorangehenden Ansprüche, dadurch gekennzeichnet, daß sie eine Anzahl von Fühlern (33, 43) aufweist, die an den Knotenpunkten von einem Gitter angeordnet sind, und die Prozessoreinheit (34, 44) vorgesehen ist, die Anzahl der von den Fühlern (33, 43) gelieferten Signale elektronisch abzutasten.

## Revendications

1. Appareil pour la détection de défauts microscopiques de surface d'une pièce métallique (2), comprenant au moins un capteur de courant induit (33,43) formé de noyaux ou barreaux parallèles indépendants (35,36) en matière ferromagnétique, une partie d'extrémité de chacun des dits noyaux (35,36) portant au moins un enroulement correspondant (37,38), lesdits noyaux (35,36) comportant à leur autre extrémité des parties terminales correspondantes (39,40) non couvertes par lesdits enroulements (37,38) et définissant un intervalle d'air ou entrefer (b) de l'ordre de quelques dizaines de »m, lesdits noyaux (35,36), lesdits enroulements (37,38) et lesdites parties terminales (39,40) étant logés dans un boîtier non ferromagnétique (11) présentant une surface d'extrémité pour le balayage de la surface (12) de la pièce, et comprenant une unité de traitement (34,44) prévue pour commander à une haute fréquence lesdits enroulements (37,38) de manière à fournir les courants induits dans ces enroulements, ladite unité de traitement (34,44) comportant des moyens de mesure de la différence des courants induits, caractérisé en ce que :
ledit capteur (33,43) comprend au moins deux paires de noyaux (35,36) parallèles à un axe commun, les dites paires de noyaux (35,36) étant agencées en une séquence circonférentiellement autour dudit axe, de sorte qu'au moins deux directions de sensibilité du capteur sont définies ;
les enroulements (37,38) de noyaux alternés (35,36) sont connectés en série de manière à fournir à la dite unité de traitement (34,44) la somme des courants induits dans les enroulements connectés en série (37,38) ;
chacune desdites parties terminales (39,40) est solidaire du noyau correspondant parmi lesdits noyaux (35, 36), et elle est reliée à ce noyau par une zone inclinée de convergence, chaque dite partie terminale (39,40) étant délimitée par une surface extérieure située dans un cylindre commun et coaxiale audit axe, et par deux surfaces radiales en regard des surfaces radiales de la partie terminale adjacente (40,39) pour définir lesdits entrefers (b), les surfaces frontales desdites parties terminales (39,40) étant dans le plan de ladite surface d'extrémité dudit boîtier (11) et exposées à l'extérieur de celui-ci.

2. Appareil suivant la revendication 1, caractérisé en ce que ledit capteur (33,43) comprend deux paires de noyaux (35,36), chacune desdites parties terminales (39,40) ayant une section transversale en forme. de secteur circulaire pour définir une paire de dits entrefers (b) angulairement espacés de 90°, les enroulements (37,38) des noyaux diamètralement opposés (35,36) étant connectés en série.

3. Appareil suivant la revendication 1 ou 2, caractérisé en ce que ladite unité de traitement (34) comprend des moyens de mesure de l'impédance desdits enroulements (37,38).

4. Appareil suivant la revendication 1 ou 2, caractérisé en ce que ledit capteur (43) comprend un enroulement auxiliaire (45) entourant lesdits noyaux (35, 36) et connecté à des sorties respectives de ladite unité de traitement (44), ladite unité de traitement (44) comportant des moyens d'excitation dudit enroulement auxiliaire (45), pour induire des courants respectifs dans lesdits enroulements (37,38), et des moyens de mesure de l'amplitude et de la phase des courants induits dans lesdits enroulements (37,38).

5. Appareil suivant une quelconque des revendications précédentes,caractérisé en ce que lesdits entrefers (b) sont remplis avec une matière métallique non ferromagnétique.

6. Appareil suivant la revendication 5, caractérisé en ce que ladite matière métallique non ferromagnétique est essentiellement sous la forme d'une feuille mince de cuivre.

7. Appareil suivant une quelconque des revendications précédentes, caractérisé en ce que ledit boîtier (11) est enfermé dans une enveloppe électriquement conductrice, pour limiter le flux de courant dispersé et pour réduire l'effet de bord.

8. Appareil suivant une quelconque des revendications précédentes, caractérisé en ce qu'il est supporté par des moyens de sustentation pneumatique, afin de supprimer le contact direct dudit capteur (33,43) et de ladite pièce (2) et de réduire le frottement dans le mouvement de balayage relatif.

9. Appareil suivant une quelconque des revendications précédentes, caractérisé en ce qu'il comprend une pluralité de dits capteurs (33,43) disposés aux noeuds d'un treillis, ladite unité de traitement (34,44) étant prévue pour balayer électroniquement les signaux fournis par ladite pluralité de capteurs (33,43).
